# EUROPÄISCHE PATENTSCHRIFT

(11) **EP 2 881 156 B1**
(45) Veröffentlichungstag und Bekanntmachung des Hinweises auf die Patenterteilung: **16.01.2019**
(21) Anmeldenummer: 14176671.7
(22) Anmeldetag: 11.07.2014
(51) Int. Cl.: B01D 35/147, B01D 29/21, B01D 29/54

(54) **Filterelement mit einem Bypasskanal sowie Filteranordnung mit einem Filterelement**
Filter element having a bypass channel and filter assembly with a filter element
Élément de filtre ayant un canal de dérivation ainsi qu'agencement de filtre doté d'un élément de filtre

(30) Priorität: 25.10.2013 DE 102013017667
(43) Veröffentlichungstag der Anmeldung: 10.06.2015
(73) Patentinhaber: MANN + HUMMEL GMBH, 71636 Ludwigsburg (DE)
(72) Erfinder: Jokschas, Günter, 71540 Murrhardt (DE); Mavroidakos, Panagiotis, 71686 Remseck (DE); Sancar, Ercan, 71679 Asperg (DE)

(56) Entgegenhaltungen:
- WO-A1-02/32543
- DE-U1- 20 006 972
- DE-U1- 20 006 974
- US-A- 3 297 162

## Beschreibung

### Technisches Gebiet

Die Erfindung betrifft ein Filterelement zum Filtern eines Flüssigmediums, insbesondere von Motoren- oder Getriebeöl. Das Filterelement umfasst eine erste und eine zweite Endplatte sowie ein zwischen den beiden Endplatten angeordnetes Filtermaterial oder -medium, das von dem zu filtrierenden Flüssigmedium in einer zur Längsachse des Filterelements radialen Strömungsrichtung durchströmbar ist. In Strömungsrichtung hinter dem Filterelement ist ein Reinraum des Filterelements angeordnet, der mit einem Flüssigmedien-Auslass des Filterelements fluidisch verbunden ist. Das Filterelement ist mit einem sogenannten Bypass- oder Umgehungskanal für das Flüssigmedium versehen, über den das Flüssigmedium unter Umgehung des Filtermaterials durch das Filterelement führbar ist. Der Bypasskanal ist über ein Umgehungsventil mit dem Reinraum fluidisch verbunden und weist einen durch die erste Endplatte gebildeten Einlass für das Flüssigmedium auf. Dem Bypasskanal ist ein Sieb zugeordnet, um Feststoffe aus dem über den Bypasskanal geführten Flüssigmedium abzutrennen. Die Erfindung betrifft weiterhin eine Filteranordnung mit einem solchen Filterelement.

### Stand der Technik

Es ist bekannt, Filterelemente in Kraftfahrzeugen einzusetzen, bei denen das Filtermedium, nicht zuletzt zur Vermeidung einer überdruckbedingten Beschädigung des Filtermaterials, mittels eines Bypasskanals um das Filtermaterial herumgeleitet wird. Dies ist beispielsweise im Falle von Ölfiltern notwendig, wenn das Flüssigmedium, also beispielsweise das Getriebe- oder Motorenöl, bei einem Kaltstart des Kraftfahrzeuges noch nicht flüssig genug ist, also noch eine zu hohe Viskosität aufweist, um das Filtermaterial zu passieren. Mit Hilfe dieser Umleitung kann ein hinreichend hoher Filtermedienfluss über das Filterelement in jedem Fall gewährleistet werden.

Aus der US 2010/0126920 A1 ist es bekannt geworden, zur Ausbildung einer Umgehung des Filtermaterials einen Überlauf vorzusehen. Die US 2002/0074272 A1 schlägt demgegenüber vor, zur Umgehung eines Filtermaterials ein Überdruckventil vorzusehen.

Das Umgehen des Filtermaterials birgt grundsätzlich die Gefahr, dass das Flüssigmedium nach Verlassen des Filterelements noch größere Schmutzpartikel mit sich führt. Die US 2004/0164008 A1 schlägt daher vor, an einem Umgehungsventil ein grobmaschiges Sieb anzuordnen, um zumindest gröbere und grobe Schmutzpartikel aus dem Filtermedium herauszusieben.

Die Anordnung eines Siebs zur Grob-Filterung des Filtermediums ist weiterhin aus der DE 10 2010 054 349 A1 und der WO 2012/110411 A1 bekannt geworden. Die bekannten Siebe sind dabei dem Umgehungsventil fluidisch nachgeschaltet, wodurch das Umgehungsventil mit Schmutzpartikeln kontaminiert werden kann. Dies kann zu einer Funktionsbeeinträchtigung des Umgehungsventils führen.

Die DE 200 06 972 U1 und die DE 200 06 974 U1 offenbaren demgegenüber, ein Sieb dem Umgehungsventil fluidisch vorzuschalten. Das Sieb ist an einem Deckelelement angeordnet, das von außen auf der mit dem Einlas des Bypasskanals versehenen Endplatte des Filterelements dichtend aufgeklipst wird. Dadurch kann das Umgehungsventil zwar vor den negativen Einflüssen der groben Feststoff-Verunreinigungen im Flüssigmedium geschützt werden. Hierdurch wird jedoch zugleich die Bauhöhe des Filterelements erhöht. Darüber hinaus ist die erforderliche druck- und fluiddichte Abdichtung des Siebs bzw. des Deckelelements gegenüber dem Filterelement aufwändig, teuer und störungsanfällig.

Die US 3 297 162 offenbart ein Filterelement mit einem Umgehungsventil und einem Sieb, wobei das Sieb dem Umgehungsventil fluidisch nachgeschaltet ist.

### Offenbarung der Erfindung

Der Erfindung liegt die Aufgabe zugrunde, ein Filterelement und eine Filteranordnung der eingangs genannten Art bereitzustellen, durch die die vorgenannten Nachteile des Standes der Technik überwunden werden.

Die das Filterelement betreffende Aufgabe wird durch ein Filterelement mit den in Patentanspruch 1 angegebenen Merkmalen gelöst. Die erfindungsgemäße Filteranordnung weist die in Patentanspruch 10 angegebenen Merkmale auf.

Das erfindungsgemäße Filterelement zeichnet sich durch ein zuverlässiges Abtrennen (Aussieben) von Feststoff-Verunreinigungen aus dem über den Bypasskanal geführten Flüssigmedium aus. Die erste Endplatte kann gemeinsam mit der Stützeinrichtung des Siebs in einem einzigen Verfahrensschritt, beispielsweise im Spritzgussverfahren erzeugt werden. Zusätzliche Montageschritte zur Befestigung der Stützeinrichtung an der ersten Endplatte entfallen. Zugleich wird die Bauhöhe des Filterelements durch die erfindungsgemäße Anordnung des Siebs nicht beeinflusst. Eine fluidische Dichtheit der Anbindung des Siebs an der Stützeinrichtung selbst gegenüber hohen Drücken des Flüssigmediums kann auf einfache und kostengünstige Weise realisiert werden.

Das Sieb kann erfindungsgemäß an der ersten Endplatte bzw. der Stützeinrichtung abschnittsweise ein- oder angespritzt sein. Die daraus resultierende formschlüssig gehaltene Anordnung des Siebs an der ersten Endplatte gewährleistet einen verschleißfreien und fluiddichten Sitz des Siebs selbst bei hohen Drücken. Nach einer alternativen Weiterbildung kann das Sieb, soweit dies aus einem thermoplastischen Kunststoff besteht, auch mit der ersten Endplatte/Stützeinrichtung verschweißt sein.

Das Sieb ist bevorzugt aus Polyamid gefertigt und kann im Bedarfsfall aus einem Edelstahl bestehen. Insgesamt können dadurch Schmutzpartikel auch bei korrosiven Flüssigmedien sicher aus dem Filtermedium gesiebt werden.

In besonders bevorzugter Ausgestaltung der Erfindung weist das Sieb eine mittlere Porengröße bzw. Maschenweite zwischen 10 Mikrometer und 500 Mikrometer, insbesondere zwischen 50 Mikrometer und 200 Mikrometer, auf. Die mittlere Porengröße bzw. Maschenweite des Siebes ist dabei vorzugsweise circa zehn Mal so groß wie die mittlere Porengröße des Filtermaterials. Hierdurch kann sowohl eine hinreichende Filterung des Flüssigmediums als auch ein kontinuierlicher partikelfreier Fluss des Flüssigmediums, wenn dieses eine hohe Viskosität aufweist, gewährleistet werden.

Nach einer bevorzugten Weiterbildung der Erfindung ist das Sieb röhrenförmig ausgebildet, um eine große (aktive) Siebfläche zur Verfügung zu stellen. Der Einlass des Bypasskanals ist dabei vorzugsweise mit der äußeren Mantelfläche des Siebes fluidisch verbunden. Das Flüssigmedium durchströmt das Sieb beim Einsatz des Filterelements somit "von außen nach innen" und wird dabei von gröberen bzw. groben Feststoffpartikeln befreit.

Ein konstruktiv besonders einfacher Aufbau und zugleich gegenüber mechanischen Belastungen robuster Aufbau des Filterelements kann dadurch erreicht werden, dass die Stützeinrichtung als ein erstes Stützrohr ausgebildet ist, an dem das Filtermaterial außenseitig anliegt. Das Stützrohr erfüllt somit eine Doppelfunktion und stützt zusätzlich das Filtermaterial innenseitig ab. Zur Abstützung des Filtermaterials über dessen gesamte Längserstreckung kann sich das erste Stützrohr bis zur zweiten Endplatte des Filterelements erstrecken. Aus funktionalen Gründen muss eine ausreichend große Durchströmmöglichkeit am Stützrohr vorhanden sein.

Alternativ kann an der zweiten Endplatte ein zweites Stützrohr angeordnet, insbesondere angeformt sein. Das zweite Stützrohr erstreckt sich dabei analog zum ersten Stützrohr von der zweiten Endplatte in axialer Richtung in das Innere des Filterelements, d.h. in Richtung auf die erste Endplatte. Das Filtermaterial liegt in diesem Fall an dem zweiten Stützrohr außenseitig an.

Eine besonders robuste und kostengünstige Bauart des Filterelements kann erfindungsgemäß dadurch realisiert werden, das das zweite Endplattenelement mit dem ersten Endplattenelement verrastbar ist. Die beiden Endplatten können in besonders einfacher Ausgestaltung des Filterelements über die beiden vorstehend erläuterten Stützrohre miteinander verrastet sein. Dadurch erübrigen sich separate Verbindungselemente und die Montage des Filterelements wird erleichtert.

Die zweite Endplatte bildet unter konstruktiven wie auch fertigungstechnischen Aspekten vorzugsweise den Auslass des Filterelements. Dadurch können im Filterelement besonders große Strömungsquerschnitte für das Flüssigmedium realisiert werden.

Das Umgehungs- oder Überdruckventil kann erfindungsgemäß ein Ventil- oder Verschlussteil aufweisen, das zwischen einer Schließstellung und einer Öffnungsstellung axial verschiebbar angeordnet ist, wobei das Verschlussteil in Schließstellung an dem ersten Stützrohr bzw. der ersten Endplatte dichtend anliegt und durch ein unter Vorspannung stehendes Federelement an dem zweiten Stützrohr abgestützt ist. Dadurch ergibt sich ein besonders einfacher und gegenüber Störungen wenig anfälliger Aufbau des Umgehungsventils. Das Federelement ist dabei vorzugsweise in Form einer Spiralfeder ausgebildet. Mittels des Federelements kann ein definierter Öffnungsdruck des Umgehungsventils auf einfache Weise vorgegeben werden.

Ein hohes Dichtvermögen bei gleichzeitiger einfacher konstruktiver Ausfertigung des Umgehungsventils kann dadurch erzielt werden, dass das Verschlussteil an seinem ersten der ersten Endplatte zuweisenden Ende pilzkopfförmig ausgebildet ist.

Nach der Erfindung kann das Verschlussteil in einer Führungsausnehmung der zweiten Endplatte bzw. des zweiten Stützrohrs der Endplatte verschiebbar geführt sein. Zur erleichterten Montage des Filterelements kann das Verschlusselement dabei mit einem oder mehreren Sicherungselementen versehen sein, durch das/die ein unerwünschtes axiales Entfernen oder Herausfallen des Verschlussteils aus der Führungsausnehmung unterbunden ist. Dies ist für die Montage des Filterelements von Vorteil.

Die Erfindung betrifft zusammenfassend ein Filterelement, bei dem ein Überdruck eines zu filtrierenden Flüssigmediums über ein Umgehungsventil abgeleitet werden kann. Dem Umgehungsventil ist ein Sieb fluidisch vorgeschaltet, so dass das Filtermedium auch dann keine groben Schmutzpartikel ausweist, wenn dieses über den Bypasskanal durch das Filterelement geführt wird. Das Filterelement weist ein Filtermaterial auf, das zwischen zwei Endplatten gehalten wird, wobei die erste Endplatte zur Ableitung des Überdrucks einen Einlass aufweist, der das Flüssigmedium zu dem röhrenförmig ausgebildeten Sieb und weiter zu dem Überdruckventil führt. Das Sieb ist an einer Stützeinrichtung befestigt, die an der ersten Endplatte angeformt ist und die sich entlang der Längsachse des Filterelements von der Endplatte in das Innere des Filterelements hineinerstreckt. Das Sieb kann insbesondere fest mit dem aus Kunststoff ausgebildeten ersten Endplattenelement vergossen sein. Eine besonders niedrige Bauhöhe des Filterelements kann dabei erzielt werden, wenn das Sieb rohrförmig und zentral und parallel zu dem in Längsrichtung des Filterelements ausgerichteten Filtermaterial an der ersten Endplatte befestigt ist.

Die erfindungsgemäße Aufgabe wird weiterhin durch eine Filteranordnung mit einem Gehäuse und einem in das Gehäuse eingesetzten, vorstehend beschriebenen Filterelement gelöst.

Weitere Merkmale und Vorteile der Erfindung ergeben sich aus der nachfolgenden detaillierten Beschreibung eines Ausführungsbeispiels der Erfindung, anhand der Figuren der Zeichnung, die erfindungswesentliche Einzelheiten zeigt sowie aus den Patentansprüchen.

Die in der Zeichnung dargestellten Merkmale sind nicht notwendigerweise maßstäblich zu verstehen und derart dargestellt, dass die erfindungsgemäßen Besonderheiten deutlich sichtbar gemacht werden können. Die verschiedenen Merkmale können einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

### Kurze Beschreibung der Zeichnungen

Es zeigen:
- Fig. 1: eine teilweise geschnittene perspektivische Ansicht eines Filterelements; und
- Fig. 2: eine vollständig geschnittene Seitenansicht des Filterelements aus Fig. 1.

### Ausführungsform der Erfindung

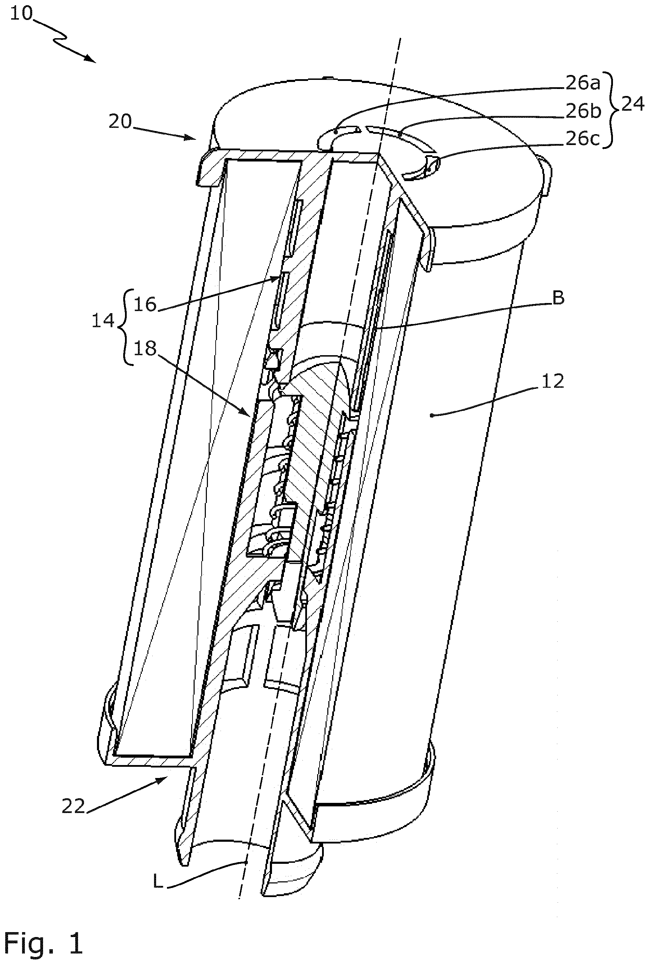

Fig. 1 zeigt ein erfindungsgemäßes Filterelement 10 zum Filtern eines Flüssigmediums, wie beispielsweise Motoren- oder Getriebeöl eines Ölkreislaufes eines Kraftfahrzeugs. Das Filterelement 10 weist ein Filtermaterial 12 auf, das in Form eines mehrfach gefalteten Textilfilters ausgebildet ist. Das Filtermaterial 12 ist vollumfänglich kreisförmig um ein Mittelrohr 14 des Filterelements 10 angeordnet. Das Mittelrohr 14 ist zur Längsachse L des Filterelements 10 konzentrisch angeordnet. Wie in Figur 1 gezeigt ist, besteht das Mittelrohr 14 vorliegend aus zwei Teilen, nämlich einem ersten Stützrohr 16 und einem zweiten Stützrohr 18. Das erste Stützrohr 16 ist Teil einer ersten Endplatte 20 des Filterelements, d.h. das erste Stützrohr 16 ist der ersten Endplatte 20 des Filterelements 10 angeformt. Das zweite Stützrohr 18 ist dementsprechend Teil einer zweiten Endplatte 22 des Filterelements 10 und dieser angeformt. Die Stützrohre 16, 18 erstrecken sich von der jeweiligen Endplatte 20, 22 in axialer Richtung in das Innere des Filterelements 10 hinein. Die beiden Endplatten 20, 22 dienen mit ihren als Stützrohr 16, 18 ausgebildeten Abschnitten als zylindrische Anlage- und Abstützfläche für das Filtermaterial 12, um dieses vor einem Kollabieren zu bewahren. Darüber hinaus dienen die beiden Endplatten 20, 22 auch als Deckel, die das Filtermaterial 12 in Längsrichtung des Filterelements 10 sichern und umfassen (übergreifen).

Die Endplatten 20, 22 sind jeweils einteilig ausgebildet, um die Herstellung und Montage des Filterelements 10 zu erleichtern.

Das Filterelement 10 ist mit einem Bypasskanal B für das Flüssigmedium versehen, durch den das Flüssigmedium unter Umgehung des Filtermaterials 12 durch das Filterelement 10 hindurchleitbar ist. Die erste Endplatte 20 begrenzt einen Einlass 24 des Bypasskanals B, der vorliegend beispielhaft eine erste Öffnung 26a, eine zweite Öffnung 26b, eine dritte Öffnung 26c sowie eine vierte Öffnung, die aufgrund der Schnittansicht gemäß Fig. 1 nicht sichtbar ist, umfasst. Die Öffnungen 26a, 26b, 26c sowie die vierte Öffnung sind kreisbogenförmig um die Längsachse L hintereinander aufgereiht angeordnet. Der Einlass 24 dient zur Ableitung eines Überdrucks am Filterelement 10. Die Öffnungen dürfen nicht zu klein sein. Eine ausreichende Durchströmmöglichkeit muss gewährleistet sein.

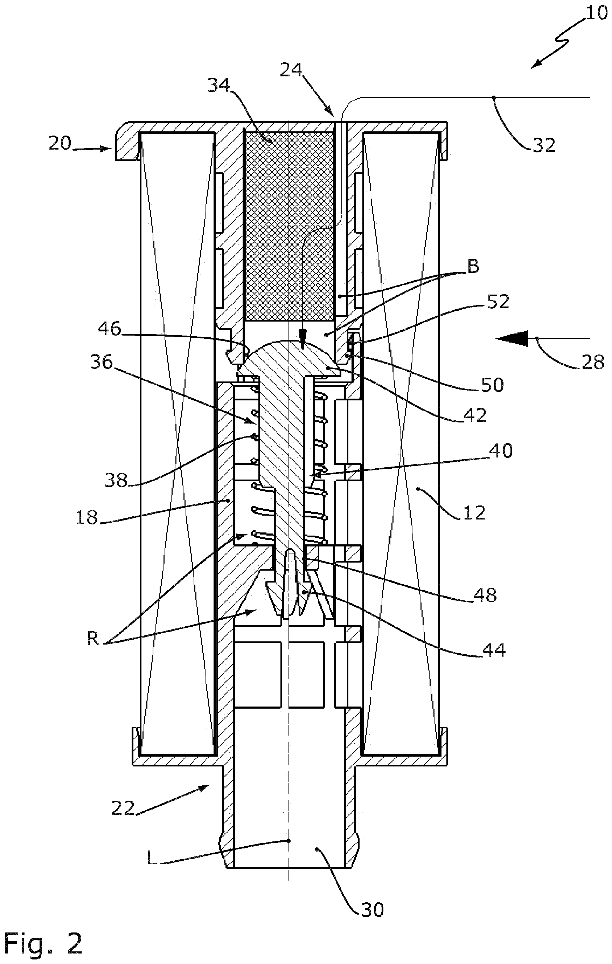

Fig. 2 zeigt das Filterelement 10 in einer geschnittenen Seitenansicht. Das Filtermaterial 12 wird im Betrieb, d.h. wenn es in ein Gehäuse (nicht gezeigt) einer Filteranordnung eingesetzt ist, quer zur Längsachse L des Filterelements 10, d.h. in einer zur Längsachse L radial gerichteten Strömungsrichtung 28 von dem Flüssigmedium durchströmt. Das Filterelement 10 weist einen Reinraum R auf, der in Strömungsrichtung 28 hinter dem Filtermaterial 12 im Inneren des Filterelements 10 angeordnet ist. Der Reinraum R ist mit einem Auslass 30 des Filterelements 10 fluidisch verbunden, über den das Flüssigmedium aus dem ersten Filterelement 10 herausführbar ist.

Ist das Flüssigmedium jedoch beispielsweise kalt, so weist es eine hohe Viskosität auf, so dass ein ausreichender Fluss durch das Filtermaterial 12 bei normalen Betriebsdrücken nicht gewährleistet werden kann. In diesem Fall steigt der Druck des ungefilterten Flüssigmediums in Strömungsrichtung 28 vor dem Filtermaterial 12. Das Flüssigmedium strömt dann in Richtung eines zweiten Pfeils 32 über den Einlass 24 in den Bypasskanal B, wie nachstehend näher erläutert wird.

Wie in Figur 2 gezeigt ist, ist der Bypasskanal B ist mit einem Sieb 34 versehen, durch das gröbere Verunreinigungen aus dem über den Bypasskanal B geführten Flüssigmedium abgetrennt werden. Durch das Sieb 34 wird somit sichergestellt, dass das über das Filterelement 10 geführte Flüssigmedium in jedem Betriebszustand des Filterelements 10 zumindest von gröberen/groben partikulären Verunreinigungen befreit wird.

Das Sieb 34 ist in oder an die aus Kunststoff gebildete erste Endplatte 20 bzw. das als Stützeinrichtung fungierende erste Stützrohr 16 abschnittsweise formschlüssig an- bzw. eingespritzt. Das Sieb 34 ist bei dem hier gezeigten Ausführungsbeispiel röhrenförmig ausgebildet und ragt von der ersten Endplatte 20 in axialer Richtung ins Innere des Filterelements 10 hinein. Hierdurch muss keine zusätzliche Bauhöhe für das Sieb 34 an dem Filterelement 10 vorgesehen werden.

Der Bypasskanal B ist über ein Umgehungsventil 36 mit dem Reinraum R und dem Auslass 30 des Filterelements fluidisch verbunden. Das Umgehungsventil 36 ist im Sinne eines einwegigen Überdruckventils ausgebildet und weist einen definierten Öffnungsdruck auf.

Das Umgehungsventil 36 umfasst ein Ventil- oder Verschlussteil 40, dessen erstes Ende 42 pilzkopfförmig ausgebildet ist und dessen zweites Ende 44 mehrere widerhakenförmige Sicherungselemente 44 aufweist. Das erste Ende 42 dichtet in der gezeigten Schließstellung des Umgehungsventils 36 einen von dem Stützrohr 16 der ersten Endplatte 20 gebildeten Ausgang 46 des Bypasskanals B ab.

Zur vorgespannten Anlage des Verschlussteils 40 an der ersten Endplatte 20 dient ein Federelement 38, das einenends an der Unterseite des ersten Endes 42 des Verschlussteils 40 und anderenends am zweiten Stützrohr 18 im Bereich einer Führungsausnehmung 48 des zweiten Stützrohrs 18 abgestützt ist. Das Verschlussteil 40 erstreckt sich durch die Führungsausnehmung 48 hindurch und ist in dieser relativ zu den beiden Endplatten 20, 22 axial verschiebbar gelagert.

Das Verschlussteil 40 wird bei der Montage des Filterelements 10 in die Führungsausnehmung 48 eingeschoben, wobei das Verschlussteil 40 mittels der widerhakenförmigen Sicherungselemente 44 mit dem Stützrohr 18 der zweiten Endplatte 22 mit axialem Spiel verrastet.

Die erste Endplatte 20 weist an ihrem ersten Stützrohr 16 weiterhin einen ersten Rastvorsprung 50 auf, der bei der Montage des Filterelements 10 mit einem zweiten Rastvorsprung 52 des zweiten Stützrohrs 18 des zweiten Endplatte 22 verrastet wird. Das Filterelement 10 kann dadurch bei der Montage einfach zusammengesteckt werden.

Sofern das unter Druck stehende ungefilterte Flüssigmedium den Öffnungsdruck des Umgehungsventils 36 überschreitet, wird das Umgehungsventil 36 betätigt. Das Verschlussteil 40 des Umgehungsventils 36 wird gegen die Kraft des Federelements 38 aus der in Fig. 2 gezeigten Schließstellung in eine nicht näher wiedergegebene Öffnungsstellung in Richtung der zweiten Endplatte 22 axial verschoben. Dadurch wird eine Passage des Flüssigmediums über den Bypasskanal in den Reinraum R freigegeben. Das gesiebte Flüssigmedium wird über den Auslass 30 aus dem Filterelement 10 herausgeführt. Sobald der außenseitig am Filtermaterial 12 anliegende Druck des ungereinigten Flüssigmediums unter den vorgegebenen Öffnungsdruck des Umgehungsventils 36 sinkt, schließt das Umgehungsventil 36 selbsttätig. Das Flüssigmedium strömt dann ausschließlich über das Filtermaterial 12 in das Filterelement 10 ein.

## Patentansprüche

1. Filterelement (10) zum Filtern eines Flüssigmediums, insbesondere von Motoren- oder Getriebeöl, umfassend:
- eine erste und eine zweite Endplatte (20, 22);
- ein Filtermaterial (12), das zwischen den beiden Endplatten (20, 22) angeordnet ist und welches von dem zu filternden Flüssigmedium in einer zur Längsachse (L) des Filterelements (10) radialen Strömungsrichtung (28) durchströmbar ist;
- einen Reinraum (R), der in Strömungsrichtung (28) hinter dem Filtermaterial (12) angeordnet ist und welcher mit einem Auslass (30) des Filterelements (10) fluidisch verbunden ist;
- einen Bypasskanal (B) für das Flüssigmedium, der über ein Umgehungsventil (36) mit dem Reinraum (R) fluidisch verbunden ist und welcher einen Einlass (24) aufweist, der durch die erste Endplatte (20) ausgebildet ist; und
- ein dem Bypasskanal (B) zugeordnetes Sieb (34) zum Abtrennen von Feststoffen aus dem über den Bypasskanal (B) geführten Flüssigmedium, **dadurch gekennzeichnet,**
**dass** das Sieb (34) an einer Stützeinrichtung formschlüssig befestigt ist, die an der ersten Endplatte (20) angeformt ist und die sich entlang der Längsachse (L) des Filterelements (10) von der Endplatte (20) in das Innere des Filterelements (10) hineinerstreckt, und dass das Sieb (34) dem Umgehungsventil (36) fluidisch vorgeschaltet ist.

2. Filterelement nach Anspruch 1, **dadurch gekennzeichnet, dass** das Sieb (34) an der Stützeinrichtung angespritzt oder mit diesem verschweißt ist.

3. Filterelement nach Anspruch 1 oder 2, **dadurch gekennzeichnet, dass** das Sieb (34) zumindest abschnittsweise röhrenförmig ausgebildet ist.

4. Filterelement nach einem der vorhergehenden Ansprüche, **dadurch gekennzeichnet, dass** die Stützeinrichtung ein erstes Stützrohr (16) ist, an dem das Filtermaterial (12) außenseitig zumindest abschnittsweise anliegt.

5. Filterelement nach einem der vorhergehenden Ansprüche, **dadurch gekennzeichnet, dass** an der zweiten Endplatte (22) ein zweites Stützrohr (18) für das Filtermaterial (12) angeformt ist, an der das Filtermaterial (12) außenseitig anliegt.

6. Filterelement nach einem der vorhergehenden Ansprüche, **dadurch gekennzeichnet, dass** die beiden Endplatten (20,22), vorzugsweise über das erste und das zweite Stützrohr (16, 18), miteinander verrastet sind.

7. Filterelement nach einem der vorhergehenden Ansprüche, **dadurch gekennzeichnet, dass** die zweite Endplatte (22) mit dem Auslass (30) versehen ist

8. Filterelement nach einem der Ansprüche 4 bis 7, **dadurch gekennzeichnet, dass** das Umgehungsventil (36) ein Verschlussteil (40) aufweist, das axial zwischen einer Schließstellung und einer Offenstellung verschiebbar angeordnet ist, wobei das Verschlussteil (40) in Schließstellung an dem ersten Stützrohr (16) dichtend anliegt und durch ein unter Vorspannung stehendes Federelement (38) an dem zweiten Stützrohr (18) abgestützt ist.

9. Filterelement nach Anspruch 8, **dadurch gekennzeichnet, dass** das Verschlussteil (40) in einer Führungsausnehmung (48) des zweiten Stützrohrs (18) geführt ist und einenends mit einem Sicherungselement (44) versehen ist.

10. Filteranordnung mit einem Gehäuse und einem in das Gehäuse eingesetzten Filterelement (10) nach einem der vorhergehenden Ansprüche.

## Claims

1. Filter element (10) for filtering a liquid medium, in particular of engine or transmission oil, comprising:
- a first and a second end plate (20, 22);
- a filter material (12) disposed between the two end plates (20, 22) and through which the liquid medium to be filtered can flow in a flow direction (28) radial to the longitudinal axis (L) of the filter element (10);
- a clean room (R) disposed in flow direction (28) behind the filter material (12) and which is fluidically connected to an outlet (30) of the filter element (10);
- a bypass channel (B) for the liquid medium fluidically connected to the clean room (R) via a bypass valve (36) and which features an inlet (24) formed by the first end plate (20); and
- a sieve (34) allocated to the bypass channel (B) for separating solid particulates from the liquid medium conveyed by the bypass channel (B), **characterized in that** the sieve (34) is attached in a positive fitting to a supporting device which is integrally molded to the first end plate (20) and which extends along the longitudinal axis (L) of the filter element (10) from the end plate (20) into the interior of the filter element (10) and **in that** the sieve (34) is fluidically disposed upstream of the bypass valve (36).

2. Filter element according to claim 1, **characterized in that** the sieve (34) is injected or welded to the supporting device.

3. Filter element according to claim 1 or 2, **characterized in that** the sieve (34) has a tubular shape at least sectionwise.

4. Filter element according to one of the preceding claims, **characterized in that** the supporting device is a first support tube (16) on which the filter material (12) abuts on the exterior side at least sectionwise.

5. Filter element according to one of the preceding claims, **characterized in that** a second support tube (18) for the filter material (12) is integrally molded to the second end plate (22) on which the filter material (12) abuts on the exterior side.

6. Filter element according to one of the above claims, **characterized in that** the two end plates (20, 22) are snap-connected to one another, preferably via the first and the second support tube (16, 18).

7. Filter element according to one of the above claims, **characterized in that** the second end plate (22) is provided with the outlet (30).

8. Filter element according to one of the claims 4 to 7, **characterized in that** the bypass valve (36) features a closing member (40) which is slidably axially disposed between a closed position and an opening position, wherein the closing member (40) in closed position sealingly contacts the first support tube (16) and is supported by the second support tube (18) by a spring element (38) which is under pretension.

9. Filter element according to claim 8, **characterized in that** the closing member (40) is guided in a guide recess (48) of the second support tube (18) and provided at one end with a safety element (44).

10. Filter arrangement with a housing and a filter element (10) inserted into the housing according to one of the above claims.

## Revendications

1. Élément filtrant (10) servant à filtrer un milieu liquide, notamment une huile pour moteurs et boîtes de vitesses, comprenant :
- une première et une seconde plaque d'extrémité (20, 22) ;
- un matériau filtrant (12) disposé entre les deux plaques d'extrémité (20, 22) et qui peut être parcouru par le milieu liquide à filtrer dans un sens d'écoulement radial (28) par rapport à l'axe longitudinal (L) de l'élément filtrant (10) ;
- un espace pur (R) disposé dans le sens d'écoulement (28) derrière le matériau filtrant (12) et qui est relié fluidiquement à une sortie (30) de l'élément filtrant (10) ;
- un canal de dérivation (B) pour le milieu liquide relié fluidiquement à l'espace pur (R) par l'intermédiaire d'une soupape de dérivation (36) et qui présente une entrée (24) réalisée par la première plaque d'extrémité (20) ; et
- un tamis (34) affecté au canal de dérivation (B) pour séparer des matières solides du milieu liquide acheminé par l'intermédiaire du canal de dérivation (B), **caractérisé en ce que** le tamis (34) est fixé par engagement positif à un dispositif de support qui est moulé sur la première plaque d'extrémité (20) et qui s'étend le long de l'axe longitudinal (L) de l'élément filtrant (10) de la plaque d'extrémité (20) jusqu'à l'intérieur de l'élément filtrant (10), et **en ce que** le tamis (34) est placé fluidiquement en amont de la soupape de dérivation (36).

2. Élément filtrant selon la revendication 1, **caractérisé en ce que** le tamis (34) est moulé par injection ou soudé sur le dispositif de support.

3. Élément filtrant selon la revendication 1 ou 2, **caractérisé en ce que** le tamis (34) est réalisé en forme de tuyau au moins sur certaines sections.

4. Elément filtrant selon l'une des revendications précédentes, **caractérisé en ce que** le dispositif de support est un premier tube de support (16) sur lequel le matériau filtrant (12) repose à l'extérieur au moins sur certaines sections.

5. Elément filtrant selon l'une des revendications précédentes, **caractérisé en ce qu'**un second tube de support (18) pour le matériau filtrant (12) est moulé sur la seconde plaque d'extrémité (22) sur laquelle le matériau filtrant (12) repose à l'extérieur.

6. Élément filtrant selon l'une des revendications précédentes, **caractérisé en ce que** les deux plaques d'extrémité (20, 22) sont encliquetées l'une avec l'autre, de préférence par l'intermédiaire du premier et du second tube de support (16, 18).

7. Élément filtrant selon l'une des revendications précédentes, **caractérisé en ce que** le second disque d'extrémité (22) est doté de la sortie (30).

8. Élément filtrant selon l'une des revendications 4 à 7, **caractérisé en ce que** la soupape de dérivation (36) présente un obturateur (40) qui est disposé de manière à pouvoir être déplacé axialement entre une position de fermeture et une position ouverte, l'obturateur (40) s'appuyant, en position fermée, de manière étanche contre le premier tube de support (16) et étant supporté sur le second tube de support (18) par un élément de ressort (38) sous prétension.

9. Élément filtrant selon la revendication 8, **caractérisé en ce que** l'obturateur (40) est guidé dans un évidement de guidage (48) du second tube de support (18) et muni à une extrémité d'un élément de fixation (44).

10. Agencement de filtre avec un boîtier et un élément filtrant (10) inséré dans le boîtier selon l'une des revendications précédentes.
